# EUROPEAN PATENT APPLICATION

(11) **EP 3 363 667 A2**
(43) Date of publication of application: **22.08.2018**
(21) Application number: 16818308.5
(22) Date of filing: 01.07.2016
(51) Int. Cl.: B60K 1/00, B60K 7/00, F03G 3/00

(54) **MAGNETIC INERTIAL THRUSTER FOR DEEP SPACE WITH A MASS HAVING VARIABLE ENERGY DENSITY THAT CONCENTRATES AND DISPERSES**

(30) Priority: 01.07.2015 MX 2015008631
(71) Applicant: Morales Solórzano, Guillermo Alberto, Ciudad de México 01490 (MX)
(72) Inventor: MORALES SOLÓRZANO, Gerardo Antonio, Ciudad de México 01490 (MX)
(74) Representative: Monzón de la Flor, Luis Miguel
(86) International application number: PCT/MX2016/000068
(87) International publication number: WO 2017/003276

(57) **Abstract**

Improved inertial propulsion device that increases the Power of the traction produced as well as the continuity of force and eliminates pitching. This mechanism is based on a simple inertial propulsor (with pitch) or a Mechanism that uses centrifugal force to generate rectilinear motion not continue. Incorporating new features that produce continuity in the movement and without pitching improving it through the invented mechanism and maximizing its characteristics of continuity and speed in the rectilinear movement, acquiring greater traction and pushing force and total elimination of the Pitch, obtaining with this betterperformance in applications for nautical, terrestrial and space transportation.

## Description

### BACKGROUND OF THE INVENTION

### Currently the propulsion systems are based on the thrust

That performs the thing that moves (cars, planes, boats, bicycles, rockets, etc.) against the medium (relying on the medium: soil, water, air or throwing matter contained in the same thing to propel in the opposite direction to the direction of the thrown material) and achieve the thrust from the contact (friction) that is exerted against the environment; as proposed by Newton's first and third law.

Inertial propulsion devices have been made, but they still need to be perfected. In order to obtain an improved inertial propulsion apparatus, with high continuity and without pitch, a device was developed which is intended to be protected by means of the present application.

### DESCRIPTION OF THE FIGURES

- Fig. 1.-: View in elevation Device
- Fig. 2.-: View of the movement of the Device
- Fig. 3.-: End 1 of the piston with counterweights and bearing on track And end 2 with magnet, telescope and spring.
- Fig. 4.-: Base or chassis of the Device and rails that support floating base
- Fig. 5.-: Arrangement of gears for transmission and motors turning force
- Fig. 6.-: The Two Twin Cavities and Force Analysis
- Fig. 7.-: Shows the force resulting from the interaction between forces produced by the system

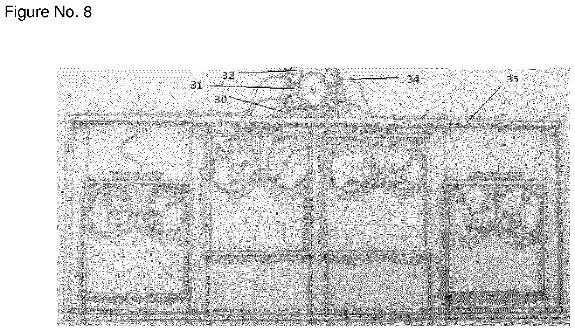

- Fig. 8.-: An application with several inertia thrusters in series, out of phase in different positions.

### DESCRIPTION OF THE INVENTION

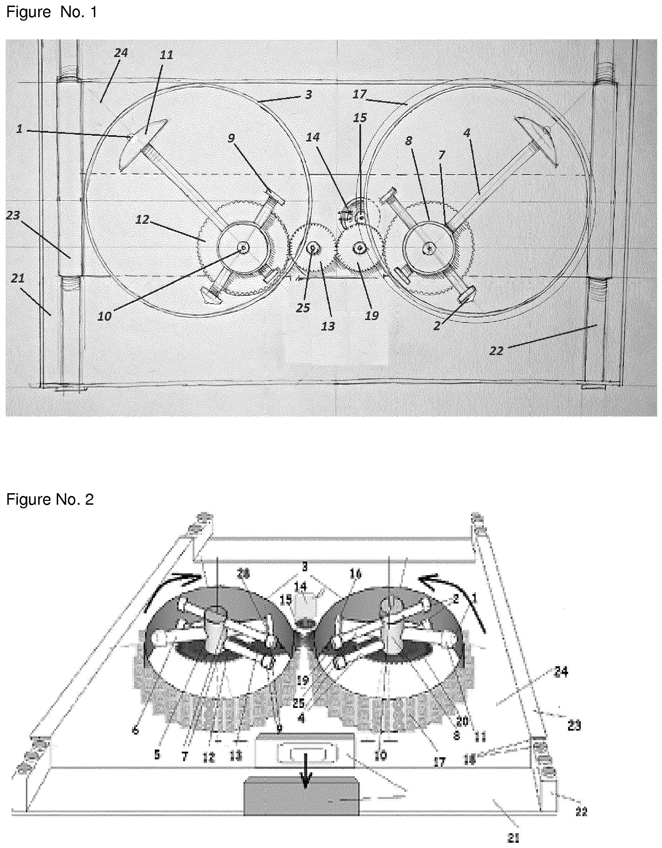

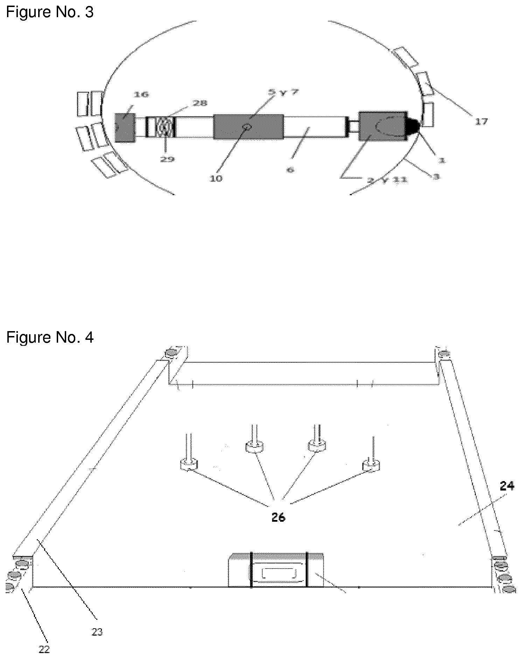

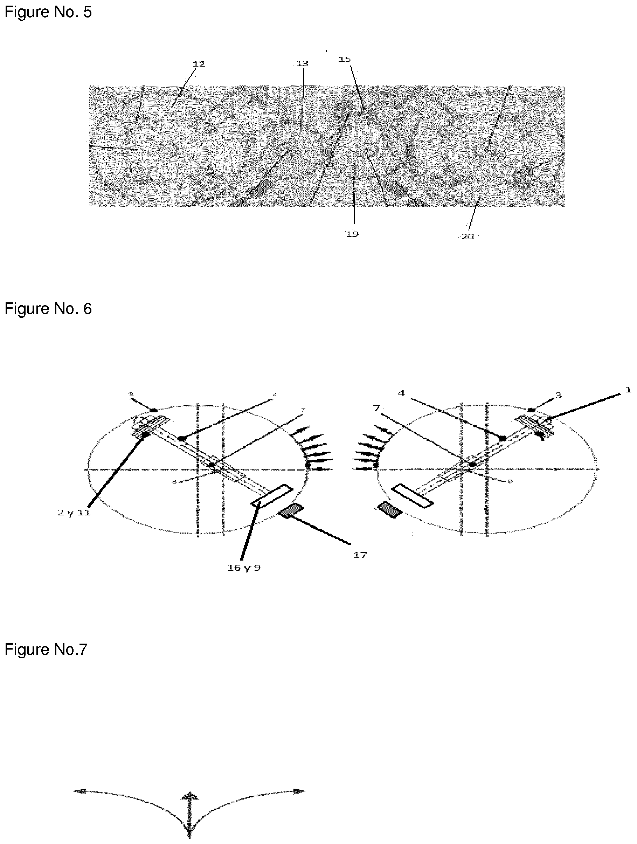

On a base (21) supported by magnetic rails (22) and (23) a base (24) (Fig. 4) is fastened, in this are attached 2 axes (10) perpendicular to this, the axes (10) rotate inside bearings (26) adhered to the base (24), each axis (10) has attached a container (8) holding 3 cylinders (7,5) perpendicular to the axis (10) each of which houses a piston-bar (4) and (6) that slides in its interior and where the pistons-bar (4) and (6) have counterweights (2,11) on one end and ball bearings (1) on the other end of both ends that serve to roll in the two cavities (3) that use as circular tracks for the bearings. At the other end of the pistons-bar (4) and (6) are coupled a magnet (9) and (16) respectively, all powerful that keeps the extremes with ball bearings (1) very close to the walls of the cavities (3) which have coupled magnets (17) in all its circular surface, in three rows and where in the section of the cavity (3) that is closest to the axis (10) has double of magnets (17) all with their poles equal to that of the magnets (9,16), to be repelled said ends with magnet, by the cavities (3) with magnets (17) (Fig.2) The ball bearings (1) roll in the cavities (3) surrounding the aforementioned elements (11, 10,8,7,6,5,4,2, 1) these cavities are two Cylindrical enclosures of rigid material that surround the axes (10) and are supported on the base (24) one adjacent to the other, in the same plane. The axes (10) are displaced from the center of the circular cavities (3) equidistantly, the bearings (1) and counterweights (2, 11) press more against the cavity (3) or track, in the part closest to the axis (10), besides concentrating its mass, because in that point and space reduced both counterweights (2, 11) approach the maximum between them respectively, and add more than a moment, transmitting to the system the force that produces continuous translation movement in the direction of the Arrows described in (Fig. 7). Because there is a certain pitch in the generated translation movement, the base (24) is attached to another base (21) by means of magnetic rails (22,23) or another that eliminate all friction and allow the system to oscillate using only the impulses of the force vector of the strongest sense and despising those of the weak force of the oscillation by eliminating the pitching. The characteristic details of this artifact are clearly shown in the following description and the accompanying drawings, as well as an illustration of that and following the same reference signs to indicate the parts and the figures shown. With respect to said figures, the artifact is formed of: a base (21) (Fig. 4) that with magnetic rails (22,23) and / or material insulating, it is attached to a base (24) that contains two cavities (3) that are attached to this base (24) in a horizontal position one adjacent to the other and where each of which has an axis (10) perpendicular to this cavity (3) and which is offset from the center with respect to the circular geometry of said cavity (3) there are two axes (10), both axes (10) with a gear (12,20) adhered; these axes (10) are fixed to a base (24) perpendicularly, each one inside a bearing (26) that is adhered to said base (24). Also on this same base are two additional axes (25) perpendicular to the base (24) with gears (13,19) where one of these connects with an electric motor (14) through the gear (15) that give it the strength motor and which in turn transmit rotational force to the axes (10) through the gears (13, 19) and these in turn to the gears (12) and (20) attached to the axes (10) and that go inside the circular cavities (3). These axes (10) they rotate in opposite directions each one with respect to the other and at the same speed through a device (Fig.5) that synchronizes them in opposite directions; each counterweights (2.11) describes a semicircular trajectory due to compression of the pistons-bar (4,6) that occurs between the ball bearing (1) against the cavity (3) in the shortest distance, between the axis (10) and the wall of the cavity (3). Combining, orienting and synchronizing two twin cavities (3) (Fig. 2) with their respective elements (11,10,9, 8, 7,6,5,4, 2, 1) and axes (10) each one rotating with a different direction, the X components of the force will be annulled and the Y components will be added (Fig.7) managing to go straight and continuous. In other words, the counterweights (2,11) of lead or heavy material and diamagnetic, which by hysteresis also generates a magnetic field of repulsion, and respectively push the walls of the cavities (3) in its shorter distances (the shortest radius) (Fig. 1), with respect to the axes (10) causing better thrust by inertial propulsion and magnetic impact in a straight direction and with a more continuous movement, according to Fig. 2 this being what constitutes the novelty of the invention. For all the above, it can be said that these characteristics of inertial traction "continuous and without pitching" have not been achieved by any other similar Artifact.

## Claims

1. A magnetic inertial impeller for deep space with a mass of variable energy density that is concentrated and dispersed, and that includes a mechanism composed of two cavities (3) or circular tracks arranged horizontally one contiguous laterally to the other on the "X" axis of an imaginary Cartesian plane,where each of the tracks or cavities (3) has an axis (10) perpendicular to said circular and offset tracks each of said axes (10) at the same distance and in a positive direction on the "Y" axis of the imaginary Cartesian plane, of the center of the cavities (3), taking as origin of the imaginary Cartesian plane the center of the cavities (3) where the mechanism is finds supported on a base (24), which also supports an electric motor (14), the electric motor (14) is coupled to the gear (15), which joins with the gear (13) and this with the gear (19) which are parallel to the base (24) and they are arranged one laterally opposite to the other, on the "X" axis of the Cartesian plane, the gears (13) and (19) are adapted to rotate in opposite directions; the gears (13) and (19) are each supported by an axis (25), wherein the axes (25) are fixedly fixed to the base (24) by means of a bearing (26) respectively; the rotational movement of the gear (13) is transmitted to a gear (12) and the rotational movement of the gear (19) is transmitted to a gear (20); the gears (12) and (20) are arranged on opposite sides of the gears (13) and (19) respectively, on the "X" axis of the Cartesian plane, and parallel to said base (24); each of the gears (12) and (20) are supported by the axes (10), wherein the axes (10) are fixedly fixed to the base (24) by means of a bearing (26) respectively, each of said axes (10) also has a container of cylinders (8) and cylinders (7.5) within this, and they are perpendicular to the axis (10) itself which is placed above the level of the gears (12) and (20) respectively and at the same level of the walls of the circular cavity (3), each of said cylinders (7, 5) slidably accommodates a piston-bar (4,6), which can slide freely inside the cylinders (7,5); **It's characterized by** a piston-bar (6) that has one of its ends with a magnet (16) (Fig. 3) and with mini telescope (28) (Fig. 3) and spring (29) (Fig. 3) between the magnet (16) and the piston-bar (6) that allows a greater retraction against the piston-bar (6) (improves the function), this magnet (16) is repelled against the wall of the cavity (3) having magnets (17), two cylinders (7) just placed above and below the cylinder (5) are also added, but offset by a certain angle with respect to the cylinder (5) which also house a piston-bar (4) and These (the cylinders) inside the cylinder container (8) and the piston-bar (4) also have at one end with a counterweights (2) and ball bearing (1) and at its other end a magnet (9) and where the ball bearings (1) of each piston-bar (4,6) remain stuck to the cavity (3) by the effect of the repulsion between the magnets (9,16) of its against ends and the cavity (3) that has attached magnets (17) in three rows and all around the circle of the cavity (3) and with the double amount of magnets (17) in the section of the cavity (3) where the axis (10) is closest to the edge of the cavity (3), because the magnets (17) have the same polarity as the magnets (9,16) repel. the pistons-bar (4,6) multiply slide freely on the cylinders (5,7) hit one first and the others immediately (increasing continuity and strength) the wall of the tracks or cavities (3) achieving several moments of force in the same cycle and in the positive direction of the "Y" axis, each time the axis(10) completes a turn, obtaining with this continuous movement in the positive direction of the "Y" axis of the apparatus.

2. The magnetic inertial impeller for deep space with density mass of variable energy that is concentrated and dispersed in accordance with the Claim 1, **characterized in that** it comprises a base (21) that supports the base (24) by means of a mechanism (21,22,23) that isolates the base (24) of the base (21) using rails (22) with magnets (18) or insulating material, which allows the base (24) and (21) to be always suspended one on top of the other, and with the movement that the base (24) experiences due to the oscillating system of inertia mounted on it, this base (24) sliding on the base (21) colliding only on the stop (27) of the end of the base (21) that is the force of the greater oscillation and only **in that** sense, without going further in the opposite direction, due to the fact that the weak force is not perceived very much, which allows uniforming the force towards one direction, eliminating the pitch.

3. The magnetic inertial impeller for deep space with density mass of variable energy that is concentrated and dispersed, in accordance with the claim 1, **characterized by** that it also comprises a container of cylinders (8) that allows you to support two additional cylinders (7) that house pistons-bar (4) that slide freely by these and carry counterweights (2) in one of its ends and in the other carry magnet (9) that is repelled against the magnets (17) of the cavity (3) and keep pressing the ball bearing (1) of its other end against the wall of the cavity (3).

4. The magnetic inertial impeller for deep space with variable energy density mass that is concentrated and dispersed in accordance with the claim 1, **characterized also** by a mechanism that generates greater density in the magnetic field between the counterweights (2,11) which is diamagnetic and the section of the cavity (3) that meets with twice as many magnets, by a process known as hysteria.

5. The magnetic inertial impeller for deep space with variable energy density mass that is concentrated and dispersed in accordance with the claim 1, **characterized by** that using a system of several propellers reason of this patent application as indicated in figure 8, we can join through a system consisting of a base for gears (30), a gear (31) that goes to the engine, another gear (32) that gives force of rotation to the propeller through a whip (34) and with the sum of several propellers (reason of this invention) conveniently aligned with a frame (35), get even more thrust due, to more improved propellers that work without pitching, operating at the same time.

6. The magnetic inertial impeller for deep space with density mass of variable energy that is concentrated and dispersed in accordance with the claim 1, **characterized by** that it has a mini telescope (28) between the magnet (9,16) with spring (29) inside to allow the length of the piston-bar (4,6) as a whole is more retractable when passing through the shorter space between the shaft (10) and the cavity (3).
